Europäisches Patentamt

European Patent Office

Office européen des brevets

(19)

(11) Numéro de publication : **0 036 800**
**B1**

(12) FASCICULE DE BREVET EUROPÉEN

(45) Date de publication du fascicule du brevet :
13.06.84

(51) Int. Cl.³ : **H 04 Q   3/00**, H 04 B   1/58

(21) Numéro de dépôt : **81400368.7**

(22) Date de dépôt : **10.03.81**

(54) **Dispositif de raccordement d'un réseau téléphonique privé au réseau public.**

(30) Priorité : **21.03.80 FR 8006401**

(43) Date de publication de la demande :
**30.09.81 Bulletin 81/39**

(45) Mention de la délivrance du brevet :
**13.06.84 Bulletin 84/24**

(84) Etats contractants désignés :
**DE GB**

(56) Documents cités :
**FR-A- 2 305 080**
**FR-A- 2 361 025**
**FR-A- 2 437 116**
**US-A- 4 041 252**
**US-A- 4 053 722**
**IEEE INTERNATIONAL CONFERENCE ON PRIVATE ELECTRONIC SWITCHING SYSTEMS, 10-12 avril 1978 Londres, GB Y. MORIKAWA: "Fully electronic TD-PAX techniques", pages 142-147**
**IBM TECHNICAL DISCLOSURE BULLETIN, vol. 16, no. 4, septembre 1973, New York, US M.A. PATTEN: "Electronic hybrid telephone line pack", pages 1173-1174**

(73) Titulaire : **THOMSON-CSF TELEPHONE**
**146, Boulevard de Valmy**
**F-92707 Colombes (FR)**

(72) Inventeur : **Gilles, Bernard**
**THOMSON-CSF SCPI 173, bld Haussmann**
**F-75360 Paris Cedex 08 (FR)**
Inventeur : **Paulet, José Alain**
**THOMSON-CSF SCPI 173, bld Haussmann**
**F-75360 Paris Cedex 08 (FR)**
Inventeur : **Roux, Raphael Jacques**
**THOMSON-CSF SCPI 173, bld Haussmann**
**F-75360 Paris Cedex 08 (FR)**

(74) Mandataire : **Chaverneff, Vladimir et al**
**THOMSON-CSF SCPI 173, Bld Haussmann**
**F-75379 Paris Cedex 08 (FR)**

Jouve, 18, rue St-Denis, 75001 Paris, France

## Description

La présente invention se rapporte à un dispositif de raccordement d'un réseau téléphonique privé au réseau téléphonique public.

Jusqu'à présent, l'isolement galvanique d'un dispositif de raccordement entre un réseau téléphonique privé et un réseau téléphonique public était généralement réalisé grâce à un transformateur dont un enroulement était relié au réseau privé, et l'autre enroulement au réseau public par l'intermédiaire d'un condensateur de capacité élevée disposé en série avec cet enroulement.

Ce dispositif de raccordement connu présente plusieurs inconvénients du fait du prix relativement élevé du transformateur utilisé, de la fragilité de la ferrite de ce transformateur, et de l'encombrement du transformateur et du condensateur qui doit être de capacité élevée, comme précisé ci-dessus.

On connaît d'après le document FR-A-2 305 080 un circuit de raccordement deux fils-quatre fils à isolation galvanique par condensateurs. Ce circuit n'est prévu que pour l'utilisation dans une installation privée pour laquelle les contraintes, en particulier la courbe de réponse, considérée du côté deux fils, sont beaucoup moins sévères que lorsqu'il s'agit d'un circuit de raccordement au réseau public. Dans ce circuit de raccordement connu, les condensateurs d'isolement devraient avoir une valeur très élevée, de plusieurs microfarads ou dizaines de microfarads, pour que la variation, en fonction de la fréquence, dans la gamme de fréquences considérée, de l'impédance de ces condensateurs ne vienne pas perturber la courbe de réponse du circuit de raccordement. Des condensateurs d'une telle capacité, isolés sous une tension de plusieurs centaines de volts, ont un très grand volume, ce qui interdit donc de réaliser le circuit de raccordement selon la technique de l'hybridation.

La présente invention a pour objet un dispositif de raccordement du type précité, dont le prix et l'encombrement soient moins élevés que ceux des dispositifs connus, et qui soit aussi moins fragile qu'eux, et qui puisse être facilement réalisé sous forme de circuit hybride.

Le dispositif de raccordement d'un réseau téléphonique privé au réseau téléphonique public, concerné par l'invention est du type à isolation galvanique par des condensateurs de faible valeur, et comporte un premier amplificateur opérationnel entre la voie émission du réseau à quatre fils et le réseau public à deux fils, l'entrée non inverseuse de cet amplificateur étant directement reliée à la voie émission du réseau à quatre fils, les sorties en opposition de phase de cet amplificateur étant reliées chacune, par un premier et un second condensateurs assurant ladite isolation galvanique, en série chacun avec une résistance de valeur appropriée, à un fil du réseau téléphonique public à deux fils, et ce dispositif comportant un second amplificateur opérationnel dont les entrées sont reliées par des troisième et quatrième condensateurs d'isolation galvanique aux deux fils du réseau public, la sortie de ce second amplificateur étant reliée à l'entrée non inverseuse d'un troisième amplificateur opérationnel dont l'entrée inverseuse est reliée par un circuit de correction de phase à la voie émission du réseau à quatre fils, et selon l'invention, ce dispositif de raccordement comporte un quatrième amplificateur opérationnel dont les entrées sont branchées, par l'intermédiaire d'un cinquième et d'un sixième condensateurs d'isolation galvanique, respectivement au point commun du premier condensateur et de la résistance qui est en série avec lui, et au point commun du second condensateur avec la résistance qui est en série avec lui, la sortie de ce quatrième amplificateur étant reliée à l'entrée inverseuse du premier amplificateur.

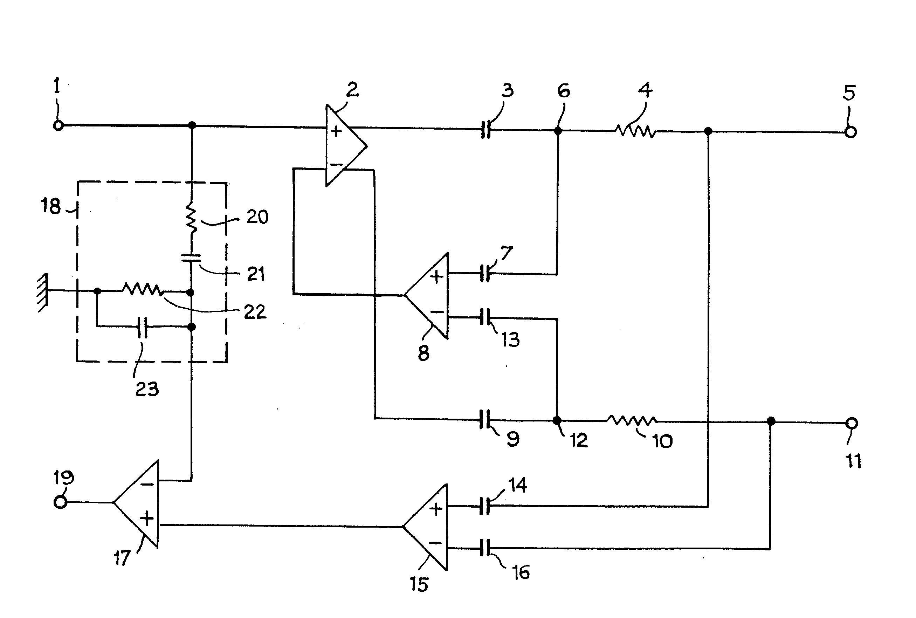

La présente invention sera mieux comprise à l'aide de la description détaillée d'un mode de réalisation pris comme exemple non limitatif et illustré par le dessin annexé dont la figure unique est un schéma de ce mode de réalisation.

Sur la figure unique du dessin, le fil émission (non représenté) de l'autocommutateur du réseau privé (non représenté) aboutit à une borne 1. La borne 1 est reliée à une entrée non inverseuse d'un premier amplificateur opérationnel 2 du type à sorties symétriques dont une première sortie est reliée par l'intermédiaire d'un condensateur 3 en série avec une résistance 4 à une borne 5 elle-même reliée à l'un des deux fils du réseau public (non représenté). Le point commun 6 du condensateur 3 et de la résistance 4 est relié par un condensateur 7 à une entrée non inverseuse d'un second amplificateur opérationnel 8 dont la sortie est reliée à une deuxième entrée inverseuse de l'amplificateur opérationnel 2. La deuxième sortie de l'amplificateur opérationnel 2 est reliée par l'intermédiaire d'un condensateur 9 en série avec une résistance 10 à une borne 11 elle-même reliée au deuxième fil du réseau public.

Le point commun 12 du condensateur 9 et de la résistance 10 est relié par un condensateur 13 à une deuxième entrée inverseuse de l'amplificateur opérationnel 8.

La borne 5 est reliée par l'intermédiaire d'un condensateur 14 à l'entrée non inverseuse d'un troisième amplificateur opérationnel 15, et la borne 11 est reliée à une seconde entrée inverseuse de l'amplificateur opérationnel 15 par l'intermédiaire d'un condensateur 16. La sortie de l'amplificateur opérationnel 15 est reliée à l'entrée non inverseuse d'un quatrième amplificateur opérationnel 17 dont l'entrée inverseuse est reliée par l'intermédiaire d'un circuit déphaseur 18 à la borne 1. La sortie de l'amplificateur opérationnel 17 est reliée à une borne 19 elle-même reliée au fil réception (non représenté) du réseau privé.

Dans l'exemple de réalisation représenté sur le dessin, le réseau déphaseur 18 comporte entre son entrée et sa sortie un circuit série composé d'une résistance 20 en série avec un condensateur 21 dont la borne reliée à la sortie de ce réseau est en outre reliée à la masse par un circuit parallèle comportant une résistance 22 et un condensateur 23. Toutefois, il est bien entendu que de nombreux autres circuits déphaseurs connus peuvent convenir s'ils apportent un déphasage approprié dans la bande de fréquences considérées et si leur déphasage est facilement réglable.

On va maintenant expliquer le fonctionnement du dispositif de raccordement décrit ci-dessus, d'abord en phase émission vers le réseau public, puis en phase réception du réseau public.

En phase émission, on désigne par Ve le signal émis par l'autocommutateur du réseau privé et arrivant sur la borne 1. Le signal Ve, amplifié par l'amplificateur 2, apparaît en phase sur l'une de ses sorties, par exemple celle reliée au condensateur 3, et en opposition de phase sur l'autre sortie.

La résistance du réseau public vue des bornes 5 et 11 étant R, on choisit avantageusement les résistances 4 et 10 égales chacune à R/2. En général R = 600 Ω, ce qui fait que les résistances 4 et 10 sont choisies de préférence égales à 300 Ω chacune. Le signal Ve doit avoir la même amplitude à l'entrée du dispositif de raccordement (sur la borne 1) qu'à la sortie (entre les bornes 5 et 11). Du fait que le circuit formé par les résistances 4 et 10, d'une part, et par la résistance vue des bornes 5 et 11, d'autre part, est un diviseur par deux, on doit avoir entre les points 6 et 12 un signal de valeur 2Ve pour un signal Ve sur la borne 1.

L'amplificateur opérationnel 8 étant choisi du type à impédance d'entrée très élevée, les condensateurs 7 et 13 peuvent avoir des valeurs relativement faibles (100 nF ou moins), et si le gain de l'amplificateur 8 est égal à 1/2, le signal à sa sortie a une valeur Ve. Chacune des entrées de l'amplificateur 2 reçoit donc un signal de valeur Ve. Le gain de l'amplificateur 2 est réglé pour qu'à l'aide de la correction apportée par l'amplificateur 8 le signal entre les points 6 et 12 ait toujours la valeur 2 Ve pour un signal de valeur Ve appliqué sur la borne 1, en tenant compte de l'affaiblissement dû aux condensateurs 3 et 9. Ces condensateurs 3 et 9 assurent l'isolement galvanique de l'amplificateur 2 par rapport au réseau public, de même que les condensateurs 7 et 13 assurent l'isolement galvanique de l'amplificateur 8 par rapport à ce même réseau public.

Dans un exemple de réalisation dans lequel les condensateurs 3, 7, 9 et 13 avaient tous une valeur de 100 nF, on a mesuré une variation d'amplitude du signal entre les bornes 5 et 11 de ± 0,1 dB environ pour un signal d'entrée constant, ce dans la bande de fréquences de 300 à 3 400 Hz.

Le signal Ve présent entre les bornes 5 et 11 est transmis par les condensateurs d'isolement galvanique 14 et 16 à l'amplificateur opérationnel 15. L'amplificateur 15 de gain égal à 1 pouvant être choisi avec une impédance d'entrée très élevée, les condensateurs 14 et 16 peuvent avoir des valeurs relativement faibles, par exemple 100 nF ou moins. Ces condensateurs 14 et 16 n'apportent alors pratiquement pas de distrosion d'amplitude en fonction de la fréquence, dans la bande des fréquences transmises. Le signal Ve se retrouve alors à la sortie de l'amplificateur 15, et donc à l'entrée non inverseuse de l'amplificateur 17. D'autre part, le signal Ve arrivant sur la borne 1, est déphasé d'un angle φ par le réseau déphaseur 18 et est ainsi appliqué sur l'entrée inverseuse de l'amplificateur 17. Si le déphasage φ apporté par le réseau déphaseur 18 est égal au déphasage affectant le signal Ve apparaissant à la sortie de 15, aucun signal dû à Ve n'apparaît à la sortie de l'amplificateur 17, le réseau public n'envoyant aucun signal aux bornes 5 et 11. Il n'y a alors aucun retour du signal d'émission vers la voie réception. Dans l'exemple de réalisation cité ci-dessus, les valeurs des éléments 20 à 23 du réseau déphaseur 18 étant respectivement de 65 KΩ, 47 nF, 79 KΩ et 470 pF, on a mesuré, pour la même bande de fréquences, une tension de retour dont le niveau était toujours inférieur d'au moins 12 dB au niveau du signal appliqué sur la borne 1.

En phase réception, le signal Ve étant nul, on suppose que le réseau public produit un signal V aux bornes 5 et 11. Ce signal V se retrouve à la sortie de l'amplificateur 15 pratiquement sans atténuation et est appliqué à l'entrée non inverseuse de l'amplificateur 17. Le signal Ve étant nul, comme précisé ci-dessus, l'entrée inverseuse de l'amplificateur 17 ne reçoit aucun signal. Par conséquent, seul le signal V apparaît sur la borne 19.

On notera que l'on peut améliorer, le cas échéant, la réjection en mode commun des parasites venant du réseau public en remplaçant l'amplificateur 15 par un circuit approprié connu.

Le dispositif de raccordement conforme à la présente invention permet donc d'assurer une bonne séparation des voies émission et réception tout en étant moins encombrant, moins coûteux et moins fragile que les dispositifs connus. Les condensateurs d'isolation galvanique peuvent être de faible valeur, et en tout cas de valeur beaucoup plus faible que le condensateur du circuit de l'art antérieur mentionné ci-dessus.

## Revendications

1. Dispositif de raccordement d'un réseau téléphonique privé au réseau téléphonique public, à isolation galvanique par des condensateurs (3, 9, 14, 16) de faible valeur, et comportant un premier amplificateur opérationnel (2) entre la voie émission (1) du réseau à quatre fils et le réseau public à deux fils (5, 11), l'entrée non inverseuse de cet amplificateur étant directement reliée à la voie émission du réseau à quatre fils, les sorties en opposition de phase de cet amplificateur étant reliées chacune par un premier et un second condensateur (3, 9) assurant ladite isolation galvanique, en série chacun avec une résistance de valeur appropriée (4, 10), à un fil (5, 11) du réseau téléphonique public à deux fils, et ce dispositif comportant un second amplificateur opérationnel (15) dont les entrées sont reliées par des troisième et quatrième condensateurs d'isolation galvanique (14, 16) aux deux fils du réseau public, la sortie de ce second amplificateur étant reliée à l'entrée non inverseuse d'un troisième amplificateur opérationnel (17) dont l'entrée inverseuse est reliée par un circuit de correction de phase (18) à la voie émission (1) du réseau à quatre fils, caractérisé par le fait qu'il comporte un quatrième amplificateur opérationnel (8) dont les entrées sont branchées, par l'intermédiaire d'un cinquième et d'un sixième condensateurs d'isolation galvanique (7, 13), respectivement au point commun du premier condensateur et de la résistance qui est en série avec lui, et au point commun du second condensateur avec la résistance qui est en série avec lui, la sortie de ce quatrième amplificateur étant reliée à l'entrée inverseuse du premier amplificateur.

2. Dispositif de raccordement selon la revendication 1, caractérisé par le fait que le gain du quatrième amplificateur opérationnel (8) est de 1/2 lorsque la somme des résistances série est égale à la résistance du réseau public vue du dispositif de raccordement.

3. Dispositif selon la revendication 1 ou 2, caractérisé par le fait que les six condensateurs d'isolation galvanique précités ont une valeur de 100 nF ou moins.

4. Dispositif selon l'une quelconque des revendications précédentes, caractérisé par le fait que le circuit de correction de phase (18) comporte une résistance (20) en série avec un condensateur (21), ce circuit série étant suivi d'un circuit parallèle composé d'une résistance (22) et d'un condensateur (23).

5. Dispositif selon la revendication 4, caractérisé par le fait que les éléments du circuit de correction de phase ont pour valeurs respectives : 65 kilohms, 47 nF, 79 kilohms et 470 pF.

**Claims**

1. A device for linking a private telephone network to the public network comprising DC insulation constituted by low value capacitors (3, 9, 14, 16), and comprising a first operational amplifier (2) between the send channel (1) of the four-wire network and the two-wire public network (5, 11), the non-inverting input of this amplifier being directly connected to the send channel of the four-wire network, this amplifier having two outputs in phase opposition, each of which is connected via a first and a second capacitor (3, 9), ensuring the said DC insulation, in series with a resistor of appropriate value (4, 10) to the public two-wire telephone network, and comprising a second operational amplifier (15), the inputs of which are connected by third and fourth DC-insulating capacitors (14, 16) to the two wires of the public network, whereas the output of this amplifier is connected to the non-inverting input of a third operational amplifier (17), the inverting input of which is connected via a phase correcting circuit (18) to the send channel (1) of the fourwire network, characterized in that it comprises a fourth operational amplifier (8), the inputs of which are each connected respectively via a fifth and sixth capacitor ensuring DC insulation (7, 13) to the common point of the first capacitor and the resistor arranged in series therewith, and to the common point of the second capacitor and the resistor arranged in series therewith respectively, the output of this fourth amplifier being connected to the inverting input of the first amplifier.

2. A linking device, characterized in that the gain of the fourth operational amplifier (8) is 1/2 when the sum of the resistances of the series resistors is equal to the resistance of the public network as seen from the linking device.

3. A device according to claim 1 or 2, characterized in that said six capacitors ensuring DC insulation have values of 100 nF or less.

4. A device according to any one of the preceding claims, characterized in that the phase correcting circuit (18) comprises a series arrangement composed of a resistor (20) and a capacitor (21), followed by a parallel shunt circuit composed of a resistor (22) and a capacitor (23).

5. A device according to claim 4, characterized in that the values of the components of the phase correcting circuit are respectively 65 kΩ, 47 nF, 79 kΩ and 470 pF.

**Ansprüche**

1. Anordnung zum Anschluß eines Nebenstellennetzes an das öffentliche Fernsprechnetz mit galvanischer Trennung über Kondensatoren (3, 9, 14, 16) kleiner Kapazität, mit einem ersten Operationsverstärker (2) zwischen dem Sendekanal (1) des Vierdrahtnetzes und dem öffentlichen Zweidrahtnetz (5, 11), wobei der nicht invertierende Eingang dieses Verstärkers direkt an den Sendekanal des Vierdrahtnetzes angeschlossen ist und die gegenphasigen Ausgänge dieses Verstärkers je über einen ersten bzw. zweiten Kondensator (3, 9), der die galvanische Trennung sicherstellt, in Reihe mit einem Widerstand geeigneten Werts (4, 10) an einen Draht (5, 11) des öffentlichen Zweidraht-Fernsprechnetzes angeschlossen sind, und mit einem zweiten Operationsverstärker (15), dessen Eingänge über einen dritten bzw. einen vierten Kondensator zur galvanischen Trennung (14, 16) an die beiden Drähte des öffentlichen Netzes angeschlossen sind und dessen Ausgang mit dem nicht invertierenden Eingang eines dritten Operationsverstärkers (17) verbunden ist, dessen invertierender Eingang über einen Phasenkorrekturschaltkreis (18) an den Sendekanal (1) des Vierdrahtnetzes angeschlossen ist, dadurch gekennzeichnet, daß die Anordnung einen vierten Operationsverstärker (8) aufweist, dessen Eingänge über einen fünften bzw. einen sechsten Kondensator zur galvanischen Trennung (7, 13) an den gemeinsamen Punkt des ersten Kondensators und des mit ihm in Reihe liegenden Widerstands bzw. an den gemeinsamen Punkt des zweiten Kondensators und des mit ihm in Reihe liegenden Widerstands angeschlossen sind, während der Ausgang dieses vierten Verstärkers an den invertierenden Eingang des ersten Verstärkers angeschlossen ist.

2. Anschlußanordnung nach Anspruch 1, dadurch gekennzeichnet, daß der Verstärkungsgrad des vierten Operationsverstärkers (8) den Wert 1/2 besitzt, wenn die Summe der Reihenwiderstände gleich dem Widerstand des öffentlichen Netzes, von der Anschlußanordnung aus gesehen, ist.

3. Anordnung nach Anspruch 1 oder 2, dadurch gekennzeichnet, daß die sechs erwähnten Kondensatoren zur galvanischen Trennung einen Kapazitätswert von höchstens 100 nF besitzen.

4. Anordnung nach einem beliebigen der vorhergehenden Ansprüche, dadurch gekennzeichnet, daß der Phasenkorrekturschaltkreis (18) einen Widerstand (20) in Reihe mit einem Kondensator (21) aufweist, wobei diese Serineschaltung von einem Parallelschaltkreis gefolgt ist, der aus einem Widerstand (22) und einem Kondensator (23) besteht.

5. Anordnung nach Anspruch 4, dadurch gekennzeichnet, daß die Schaltelemente des Phasenkorrekturschaltkreises folgende Werte aufweisen : 65 kΩ, 47 nF, 79 kΩ und 470 pF.